# EUROPEAN PATENT APPLICATION

(11) **EP 1 829 742 A2**
(43) Date of publication of application: **05.09.2007**
(21) Application number: 07103307.0
(22) Date of filing: 01.03.2007
(51) Int. Cl.: B60P 3/39

(54) **Folding bed, pariculary for caravans and the like**

(30) Priority: 03.03.2006 IT BO20060019 U
(71) Applicant: Di Mario, Giuseppe, 47015 Modigliana FC (IT)
(72) Inventor: Di Mario, Giuseppe, 47015 Modigliana FC (IT)
(74) Representative: Modiano, Micaela Nadia

(57) **Abstract**

A folding bed, comprising a first frame and a second frame (7, 8), each constituted by at least two longitudinal and parallel profiles (9, 10, 11, 12, 13, 14) and by a transverse profile (15, 16), which rigidly connects at one end the longitudinal profiles, the ends of the longitudinal profiles of the frames that lie opposite the transverse profile being mutually articulated, a plurality of strips (20, 21) being provided which form a supporting surface for a mattress or the like and are rigidly coupled by means of their opposite ends to the longitudinal profiles.

## Description

The present invention relates to a folding bed particularly for caravans, campervans such as truck campers, motor homes and the like.

Folding beds are already known commercially. In particular, one type of folding bed which is often installed in caravans and campervans of various kinds is constituted by a frame which is provided by mutually connecting aluminum profiles in order to obtain a rectangular structure which is adapted to support a net or a system of elastic strips (known as slats) arranged so as to form a supporting surface for a mattress.

If the bed must be larger, for example because it is intended to form a double bed, the structure is composed substantially of two rectangular frames which are articulately connected to each other along a longitudinal axis which coincides with, or is parallel to, the central plane of the bed. The opposite ends of the slats are connected to the longitudinal sides of each frame and therefore are perpendicular to the axis of articulation of the frames.

Known folding beds have drawbacks which can be ascribed to the arrangement assumed by the pivoting axis when the beds are installed in tight spaces, as occurs especially in the particular category of caravans and campervans.

In this type of vehicle there is in fact the need to reduce the bulk of the beds when the space in which they are installed is to be used for another purpose, for example to act as a living room, dining room or others. In this case, the possibility to fold the bed clashes with the possibility to have free and convenient access from outside to the space in which the bed is installed, and indeed, when the bed is folded, it is not possible to use the space to accommodate even bulky objects. Therefore, this need is strongly felt by those who use caravans and campervans as a means of transport and recreation or to travel to resorts, who need to have space available to load for example bicycles, beach articles and other items.

The aim of the present invention is to provide a folding bed which is conceived so that it can be reduced to such dimensions as to not hinder access to the space in which it is installed, particularly if such space is small.

Within this aim, an object of the present invention is to provide a folding bed which has a simple structure, can be produced with traditional methods and with materials which are easily commercially available so that it is cheap and accessible to a wide range of potential customers.

Another object of the present invention is to provide a folding bed whose structure is adapted for use in recreational vehicles such as caravans, truck campers, motor homes, and the like.

This aim and these and other objects, which will become better apparent hereinafter, are achieved by a folding bed, characterized in that it comprises a first frame and a second frame, each constituted by at least two longitudinal and parallel profiles and by a transverse profile, which rigidly connects at one end said longitudinal profiles, the ends of said longitudinal profiles of said frames that lie opposite said transverse profile being mutually articulated, a plurality of strips being provided which form a supporting surface for a mattress or the like and are rigidly coupled by means of their opposite ends to said longitudinal profiles.

Further characteristics and advantages of the present invention will become better apparent from the following detailed description of a preferred embodiment, illustrated by way of non-limiting example in the accompanying drawings, wherein:
Figure 1 is a plan view of the interior of a campervan provided with a folding bed in the open condition;
Figure 2 is a plan view of the interior of the campervan of Figure 1, in which the bed is in the folded condition;
Figure 3 is a perspective view of the bed alone, in the open condition;
Figure 4 is a perspective view of the two frames that compose the bed;
Figure 5 is a perspective view of the bed alone, in the folded condition;
Figure 6 is a view of a detail of the pivoting of the frames;
Figures 7 and 8 are two exploded views of the detail of Figure 5.

With reference to the figures, the reference numeral 1 generally designates a generic campervan (for example a motor home), the containment space of which is designated by the reference numeral 2 and can be accessed through a rear hatch 3 and a door 4 of the sliding type, which is usually provided on the right side of the vehicle with respect to the travel direction A.

The reference numeral 5 generally designates a folding bed according to the invention, arranged in the region of a deck 6 of the vehicle which is adjacent to the hatch 3.

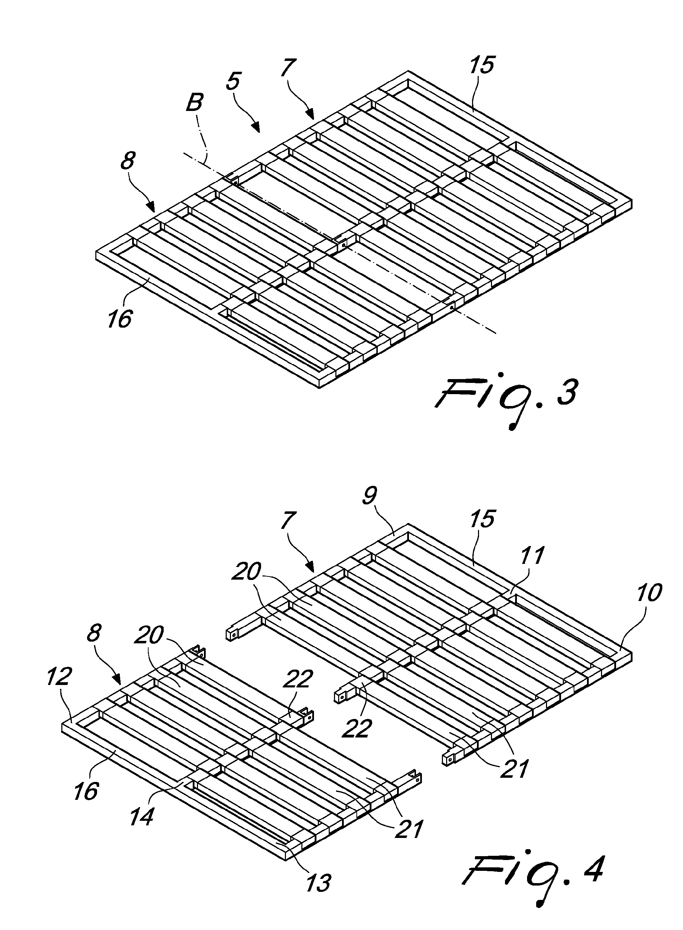

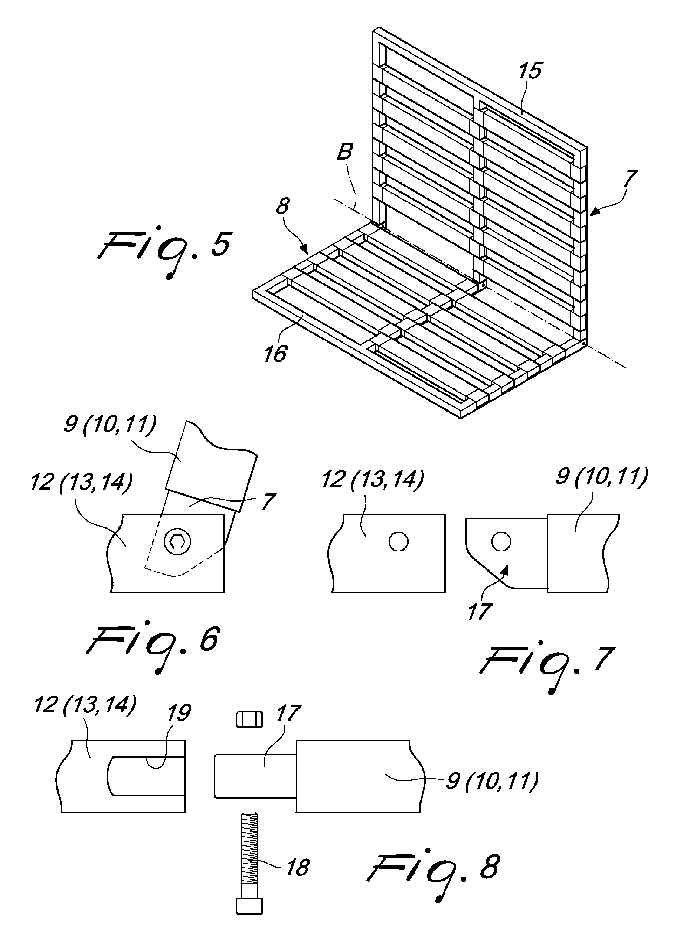

As shown more clearly in Figures 3 and 4, the bed is constituted by two substantially rectangular frames 7, 8, each of which comprises a set of three parallel profiles 9, 10, 11 and 12, 13, 14 respectively, which are mutually connected at one end by respective transverse profiles 15, 16.

The ends of the profiles 9-11 that lie opposite the transverse profile 15 are articulated to the respective ends of the profiles 12-14 which lie opposite the transverse profile 16. In this manner, a structure is provided which can fold along an axis B which is parallel to the travel direction A. Pivoting is provided conveniently by providing inserts 17 which are associated with the ends of the longitudinal profiles which lie opposite the cross-members 15, 16 and are adapted to be connected articulately to said opposite ends by means of through screws or pins 18. Conveniently, the engagement ends of the inserts 17 are provided with recesses 19, in which the inserts 17 can engage in order to allow the rotation of the frames.

The elastic strips which form the supporting surface of a mattress lie between the lateral profiles 9, 12 and 10, 13 and the central profiles 11, 14.

Said elastic strips are constituted in practice by slightly curved slats 20, 21, the ends of which are recessed in pockets which protrude from tubular supports arranged on the profiles 11-14. Said supports are generally designated by the reference numeral 22 and are not described in detail in the figures, since they have a traditional shape which is not within the scope of the inventive concept of the present invention. Conveniently, the supports 22 are oriented so that the slats 20 comprised between the profiles 9, 11 and 12, 14 are alternated with respect to the slats 21 comprised between the profiles 10, 11 and 13, 14.

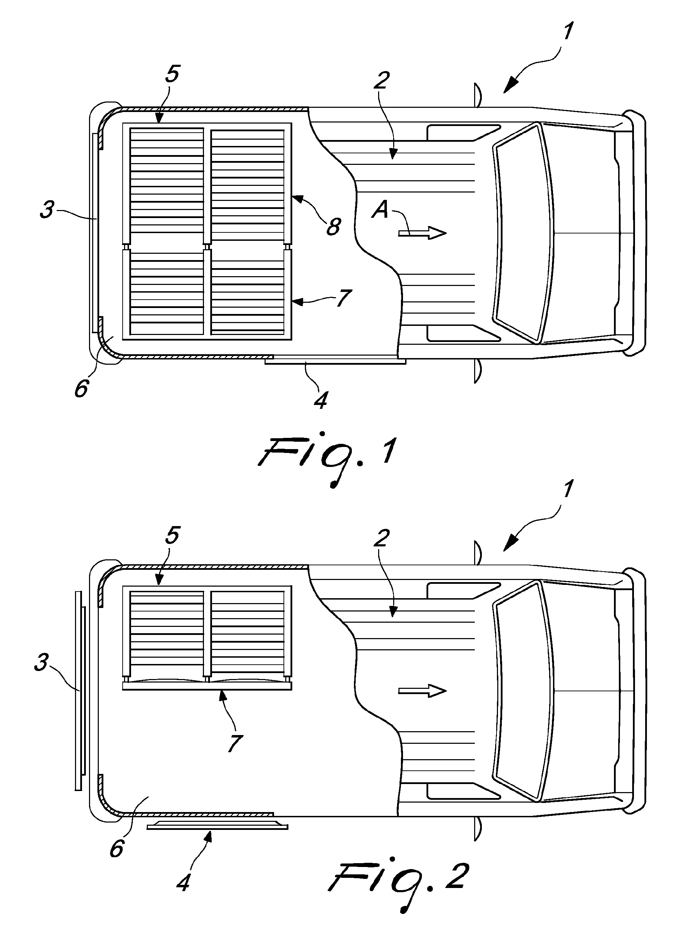

As shown in Figure 1, the frames 7, 8, once they are open in the horizontal position, form a twin bed which allows users to lie comfortably.

When instead one wishes to recover the available volume of the space 2 in order to use it for other purposes, the frame 7 is turned into a vertical position (Figure 2), thus freeing half of the deck 6. In this manner, half of the deck 6 is conveniently accessible by opening the hatch 3 or the door 4. In view of the large dimensions of the hatch 3 and of the door 4, it is possible to load objects of various kinds, even bulky ones, such as bicycles, scooters, small watercraft, and so forth, in the space.

As can be seen, the described invention perfectly achieves the intended aim and objects. In particular, it is noted that the surface formed by the slats 20, 21 designed to support the mattress is extremely comfortable, since it is continuous and without boards which can cause the posture of users to be uncomfortable.

In the practical embodiment of the invention, numerous modifications and variations are possible, all of which are within the scope of the inventive concept defined by the appended claims.

For example, a first alternative embodiment allows one frame (for example the frame 7) to slide transversely to the travel direction A so that the frame (for example 8) that is lifted to assume a vertical position can be arranged adjacent to the side wall of the vehicle and act as a back of a sofa in which the frame 7 constitutes the seat.

The disclosures in Italian Utility Model Application No. B02006U000019, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A folding bed (5), **characterized in that** it comprises a first frame and a second frame (7, 8), each constituted by at least two longitudinal and parallel profiles (9, 10, 11, 12, 13, 14) and by a transverse profile (15, 16), which rigidly connects at one end said longitudinal profiles, the ends of said longitudinal profiles of said frames that lie opposite said transverse profile being mutually articulated, a plurality of strips (20, 21) being provided which form a supporting surface for a mattress or the like and are rigidly coupled by means of their opposite ends to said longitudinal profiles.

2. The bed according to claim 1, **characterized in that** said first frame and said second frame (7, 8) each comprise a third longitudinal profile (11, 14), which is intermediate with respect to said two longitudinal profiles, said third profiles having an end which is connected to said transverse profiles, their opposite ends being mutually articulated about the same articulation axis as said first and second longitudinal profiles.

3. The bed according to one of claims 1 and 2, **characterized in that** it is designed to be installed in a recreational vehicle so that the pivoting axis of said frames (7, 8) is perpendicular to the travel direction of the vehicle.
